# EUROPÄISCHE PATENTANMELDUNG

(11) **EP 4 819 325 A1**
(43) Veröffentlichungstag der Anmeldung: **07.10.2026**
(21) Anmeldenummer: 26165099.8
(22) Anmeldetag: 16.03.2026
(51) Int. Cl.: H01M 50/211, H01M 10/42, H01M 50/30, H01M 50/342, H01M 50/367

(54) **BATTERIEMODUL SOWIE HOCHVOLT-BATTERIESYSTEM**

(30) Priorität: 31.03.2025 DE 102025112474
(71) Anmelder: Volkswagen Aktiengesellschaft, 38440 Wolfsburg (DE)
(72) Erfinder: Orazov, Nury, 38440 Wolfsburg (DE); Grabow, Jens, 38440 Wolfsburg (DE); Kolb, Johann, 38440 Wolfsburg (DE); Koppenhagen, Kay, 38440 Wolfsburg (DE); Giebel, Jan, 38440 Wolfsburg (DE); Krüger, Arne Jan, 38440 Wolfsburg (DE)

(57) **Zusammenfassung**

Die Erfindung betrifft ein Batteriemodul (3) mit einem Modulgehäuse (13), in dem ein Zellverband aus Batteriezellen (7) angeordnet ist, die miteinander elektrisch verschaltet sind, wobei die Batteriezellen (7) jeweils aus einer mit Flüssig-, oder Teilflüssig-Elektrolyt (E) benetzten Elektroden-/Separatoranordnung (18) aufgebaut sind. Erfindungsgemäß ist jede der Elektroden-/Separatoranordnungen (18) in einer elektrolytbeständigen Schutzhülle (21) angeordnet, die die Elektroden-/Separatoranordnung (18) elektrolytdicht nach außen abdichtet. Die Schutzhülle (21) übernimmt als eine modulinnere Barriere eine elektrolytabdichtende Funktion, während das Modulgehäuse (13) als moduläußere Barriere die Gasdichtheit sowie die mechanische Stabilität der jeweiligen Batteriezelle (7) im Zellverband gewährleistet.

## Beschreibung

Die Erfindung betrifft ein Batteriemodul nach dem Oberbegriff des Anspruches 1 sowie ein Hochvolt-Batteriesystem nach Anspruch 9.

Ein Hochvolt-Batteriesystem eines elektrisch betriebenen Fahrzeugs besteht aus einem Zellverband aus Batteriezellen, insbesondere Lithium-Ionen-Batteriezellen, die elektrisch miteinander verschaltet sind. Jede der Batteriezellen weist ein Zellgehäuse auf, das über eine gewisse mechanische Stabilität (das heißt Druckbeständigkeit und Durchstichwiderstand) verfügt. In dem Zellgehäuse ist eine mit einem Flüssig-Elektrolyt benetzte Elektroden-/Separatoranordnung angeordnet. Das Zellgehäuse muss dabei sowohl Anforderungen bezüglich Elektrolytdichtheit als auch Anforderungen bezüglich Gasdichtheit erfüllen, und zwar gegenüber einer im Zellgehäuseinneren stattfindenden Gasbildung während des Batteriebetriebs. Der Materialaufwand zur Bereitstellung der Zellgehäuse ist daher entsprechend hoch. Das elektrochemisch inaktive Zellgehäusematerial führt zudem zu einer Reduzierung der volumetrischen und gravimetrischen Energiedichte des Hochvolt-Batteriesystems.

Vor diesem Hintergrund weist ein gattungsgemäßes Hochvolt-Batteriesystem zumindest ein Batteriemodul mit einem festen, formstabilen Modulgehäuse mit einem positiven und einem negativen Modulterminal auf. In dem Modulgehäuse ist ein Zellverband aus gehäuselosen Batteriezellen, insbesondere Lithium-Ionen-Batteriezellen, angeordnet. Diese sind miteinander elektrisch in Reihenschaltung und/oder in Parallelschaltung verschaltet sowie in elektrischer Verbindung mit den Modulterminals. Jede der Batteriezellen ist aus einer mit Flüssig-, oder Teilflüssig-Elektrolyt benetzten Elektroden-/Separatoranordnung aufgebaut.

Aus der AT 526 110 A1 ist ein Batteriepack bekannt, das aus einem Gehäuse, einem Batterieanschluss und mehreren hintereinander angeordneten Elektrodenstapeln besteht. Jeder Elektrodenstapel enthält eine Anode, eine Kathode sowie einen zwischengeordneten Separator. Zusätzlich weist der Batteriepack Volumenkompensationselemente im Gehäuse auf, die Volumenänderungen der Elektrodenstapel ausgleichen.

Aus DE 10 2021 214 854 A1 ist eine Akkumulatoreinheit und ein Verfahren zur Herstellung einer Akkumulatoreinheit bekannt. Die Akkumulatoreinheit besteht aus mehreren Elektrodeneinheiten, die in einem gemeinsamen Gehäuse untergebracht sind. Jede Elektrodeneinheit enthält eine Anode, eine Kathode und einen Separator. Die ElektrodenEinheiten sind so angeordnet, dass sie keine individuellen Zellgehäuse benötigen, sondern direkt in das Gehäuse der Akkumulatoreinheit integriert sind.

Die Aufgabe der Erfindung besteht darin, ein Batteriemodul oder ein Hochvolt-Batteriesystem bereitzustellen, bei dem die volumetrische und gravimetrische Energiedichte im Vergleich zum Stand der Technik weiter erhöht ist.

Die Aufgabe ist durch die Merkmale des Anspruches 1 oder 9 gelöst. Bevorzugte Weiterbildungen der Erfindung sind in den Unteransprüchen offenbart.

Die Erfindung betrifft ein Batteriemodul mit einem insbesondere festen, formstabilen Modulgehäuse mit einem positiven und einem negativen Modulterminal. In dem Modulgehäuse ist ein Zellverband aus insbesondere gehäuselosen Batteriezellen, insbesondere Lithium-Ionen-Batteriezellen angeordnet . Diese sind miteinander elektrisch verschaltet sowie in elektrischer Verbindung mit den Modulterminals. Die Batteriezellen sind jeweils aus einer mit Flüssig-, oder Teilflüssig-Elektrolyt benetzten Elektroden-/Separatoranordnung aufgebaut. Gemäß dem kennzeichnenden Teil des Anspruches 1 ist folgende Maßnahme getroffen, um die die volumetrische und gravimetrische Energiedichte zu erhöhen: So ist jede der Elektroden- /Separatoranordnungen - anstelle in einem herkömmlichen Zellgehäuse - in einer elektrodenbeständigen Schutzhülle angeordnet, die die Elektroden-/Separatoranordnung elektrolytdicht nach außen abdichtet. Dadurch kann die Schutzhülle als eine modulinnere Barriere lediglich eine elektrolytabdichtende Funktion übernehmen. Das Modulgehäuse wirkt dagegen als eine moduläußere Barriere, die die Gasdichtheit sowie die mechanische Stabilität des darin angeordneten Zellverbandes gewährleistet. Die Verwendung einer elektrolytabdichtenden Schutzhülle anstelle eines klassischen Zellgehäuses reduziert den Materialeinsatz und die Fertigungskosten erheblich. Die Trennung der Funktionen in eine innere Barriere (Schutzhülle) für die Elektrolytdichtigkeit und eine äußere Barriere (Modulgehäuse) für Gasdichtheit und mechanische Stabilität ermöglicht eine effizientere Bauweise der Batteriemodule. Zudem verbessert diese Struktur die volumetrische und gravimetrische Energiedichte der Batterie, da das sonst für das Zellgehäuse benötigte Material entfällt. Die Zellintegration in das Modul führt zudem zu einer Reduktion mechanischer und elektrischer Schnittstellen, wodurch die Gesamtzuverlässigkeit der Batterie erhöht wird.

Während eines Batteriebetriebs findet in der jeweiligen Batteriezelle eine Gasbildung, etwa die Bildung von O₂-, H₂-, CO-, oder CO₂-haltiges Gas. Dieses Gas diffundiert zumindest teilweise durch die Schutzhülle der jeweiligen Batteriezelle nach außen und sammelt sich im Modulgehäuseinneren. Da sich während des Batteriebetriebs Gase (zum Beispiel O₂, H₂, CO, CO₂) bilden können, bietet die gasdurchlässige Schutzhülle den Vorteil, dass diese Gase in den Innenraum des Modulgehäuses diffundieren können. Dadurch entfällt die Notwendigkeit, die Schutzhülle gasdicht auszulegen, was die Materialanforderungen reduziert. Die Möglichkeit, die Gase innerhalb des Modulgehäuses zu sammeln, erleichtert zudem deren kontrollierte Ableitung, wodurch Sicherheitsrisiken minimiert werden. Dies trägt zur Erhöhung der Betriebssicherheit bei, insbesondere im Hinblick auf Druckaufbau innerhalb einzelner Batteriezellen.

Jede der Batteriezellen weist jeweils einen positiven und einen negativen Zellableiter auf, die elektrolytdicht aus der Schutzhülle herausgeführt sind. Zur elektrischen Verschaltung der Batteriezellen sind deren Zellableiter entweder direkt oder über Stromschienen miteinander in elektrischem Kontakt. Die direkte oder über Stromschienen realisierte elektrische Verschaltung der Zellableiter führt zu einer Reduzierung der Fertigungsschritte und der Materialkosten, da zusätzliche Komponenten wie Zellgehäuse-Kontakte entfallen. Dies verbessert die Effizienz der Produktion und reduziert elektrische Widerstände, was sich positiv auf die Gesamtperformance und den Wirkungsgrad der Batterie auswirkt. Zudem ermöglicht die elektrolytdichte Durchführung der Ableiter eine einfache und sichere elektrische Kontaktierung, ohne die Dichtigkeit der Elektrolytbarriere zu gefährden.

In einer konkreten Ausführungsform ist dem jeweiligen Batteriemodul eine Zellbalancing- und/oder Überwachungselektronik zugeordnet. Diese erfasst über Messabgriffe der Zellspannung jeder der Batteriezellen. Die Zellbalancing- und/oder Überwachungselektronik kann bevorzugt nicht außerhalb, sondern innerhalb des Modulgehäuses angeordnet sein. Durch die Integration der Zellbalancing- und Überwachungselektronik innerhalb des Modulgehäuses entfällt die Notwendigkeit, einzelne Zellpole nach außen zu führen, wodurch potenzielle Dichtigkeitsprobleme vermieden werden. Dies führt zu einer verbesserten mechanischen und elektrischen Integration der Messtechnik in das Modul. Außerdem wird die Fertigung vereinfacht und der Platzbedarf für zusätzliche Verkabelung reduziert.

Die Zellbalancing- und/oder Überwachungselektronik kann mit einem Batteriemanagementsystem in Datenverbindung sein, mittels dem die Zellbalancing- und/oder Überwachungselektronik ansteuerbar ist. Bevorzugt kann die Zellbalancing- und/oder Überwachungselektronik eine drahtloses Kommunikationsschnittstelle aufweisen. Die Datenverbindung zwischen der Zellbalancing- und/oder Überwachungselektronik und dem Batteriemanagementsystem kann daher als eine drahtlose Datenverbindung ausgeführt sein. Die drahtlose Kommunikation zwischen Zellbalancing- und Überwachungselektronik und dem Batteriemanagementsystem bietet mehrere Vorteile: Zum einen reduziert sich der Verkabelungsaufwand erheblich, was die Komplexität der Modulherstellung und -wartung senkt. Zum anderen wird die Möglichkeit geschaffen, die Module während Lagerung und Transport kontinuierlich zu überwachen, ohne dass physische Verbindungen erforderlich sind. Dies erhöht die Qualitätssicherung in der Batterieproduktion und vereinfacht diagnostische Maßnahmen im Betrieb.

In einer technischen Umsetzung können die Batteriezellen in einer Stapelrichtung hintereinander im Modulgehäuse gestapelt sein. Zur Vermeidung einer thermischen Propagation kann zwischen benachbarten Batteriezellen ein Zellzwischenmaterial als thermische Isolierung angeordnet sein. Das Zellzwischenmaterial kann bevorzugt auch als ein Kompensationspad wirken, das Swellingkräfte aufnimmt, die sich bei Lade-/Entladevorgängen während des Batteriebetriebs bilden. Das im Modulgehäuse integrierte Zellzwischenmaterial zur thermischen Isolierung bietet daher zwei wesentliche Vorteile: Es verhindert die thermische Propagation zwischen den Batteriezellen und reduziert damit das Risiko von Kettenreaktionen bei thermischen Ereignissen. Zusätzlich wirkt das Zwischenmaterial als Kompensationspad für Swellingkräfte, die während der Alterung sowie des Lade- und Entladevorgangs entstehen. Dadurch wird die mechanische Stabilität der Zellstapelung erhöht und eine gleichmäßigere Druckverteilung im Modulgehäuse gewährleistet. Diese Maßnahmen verbessern sowohl die Sicherheit als auch die langfristige Leistungsfähigkeit der Batterie.

Das Modulgehäuseinnere kann komplett sauerstofffrei ausgeführt sein. Hierzu ist es erforderlich, dass der Zusammenbau des Modulgehäuses in einer inerten Atmosphäre erfolgt. Das sauerstofffreie Modulgehäuse und die Montage in einer inerten Atmosphäre bieten entscheidende Vorteile für die Sicherheit und die Lebensdauer der Batterie. Da Sauerstoff eine zentrale Rolle bei der Entzündung von Batteriebränden spielt, wird durch das Entfernen von Sauerstoff im Gehäuse die Brandgefahr erheblich reduziert. Zudem trägt eine inerte Atmosphäre während des Zusammenbaus dazu bei, unerwünschte chemische Reaktionen, insbesondere Oxidationen, zu verhindern, was sich positiv auf die elektrochemische Stabilität und die Lebensdauer der Batteriezellen auswirkt.

In einer Weiterbildung kann das Modulgehäuse zumindest einen, mittels einer Berstscheibe geschlossenen Gasaustritt aufweisen, über den im Falle eines thermischen Durchgehens einer der Batteriezellen das entstehende Gas kontrolliert nach außen ableitbar ist. Im Hinblick auf Sicherheitsaspekte kann jeder der Batteriezellen ein im Modulgehäuse ausgebildeter Gasaustritt zugeordnet sein. Die Integration von Berstscheiben in das Modulgehäuse ermöglicht somit eine kontrollierte Ableitung von Gasen im Falle eines thermischen Durchgehens. Dadurch wird das Risiko eines unkontrollierten Druckanstiegs und damit verbundener explosionsartiger Ereignisse reduziert. Die gezielte Platzierung der Berstscheiben gegenüber einzelnen Batteriezellen erlaubt eine lokalisierte Druckentlastung, wodurch das Modul als Ganzes geschützt wird. Dies trägt maßgeblich zur Sicherheit des Batteriemoduls bei und minimiert Schäden im Falle einer Zellausgasung.

Das Hochvolt-Batteriesystem kann einen Batterierahmen aufweisen, in dem zumindest eines, bevorzugt eine Mehrzahl von erfindungsgemäßen Batteriemodulen angeordnet ist. Der Batterierahmen kann aus Hohlträgern aufgebaut sein. Deren Hohlräume bilden einen Gasführungskanal, der in Strömungsverbindung mit dem Gasaustritt des Modulgehäuses des Batteriemoduls steht. Dadurch können im Havariefall die bei einem thermischen Durchgehen entstehenden Gase kontrolliert über die Hohlträger des Batterierahmens nach fahrzeugaußen geführt werden. Die Nutzung des Batterierahmens als Gasführungskanal bietet eine innovative Sicherheitslösung für Hochvolt-Batteriesysteme. Im Falle eines thermischen Durchgehens können entstehende Gase gezielt über die Hohlträger des Rahmens nach außen geleitet werden, wodurch das Risiko einer Druckerhöhung im Fahrzeuginneren minimiert wird. Dies stellt einen erheblichen Sicherheitsvorteil dar, da die entstehenden Gase nicht unkontrolliert in das Fahrzeug gelangen, sondern effizient nach außen abgeführt werden können.

Nachfolgend ist ein Ausführungsbeispiel der Erfindung anhand der beigefügten Figuren beschrieben.

Es zeigen:

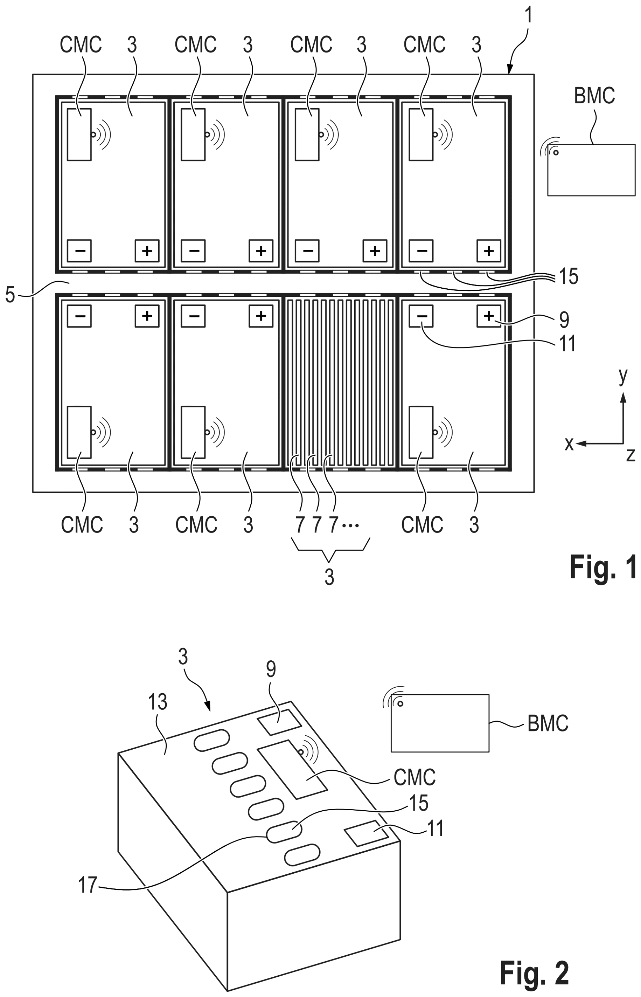

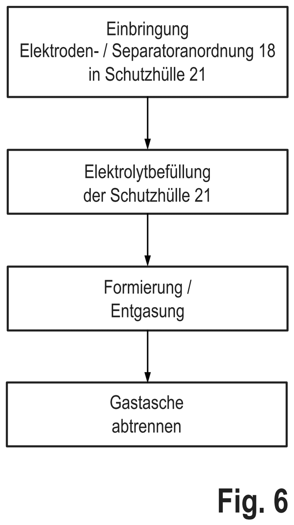

- Figuren 1 bis 6: unterschiedliche Ansichten, anhand derer der Aufbau des Hochvolt-Batteriesystems bzw. eines Batteriemoduls veranschaulicht sind.

In der Figur 1 ist ein Hochvolt-Batteriesystem für ein elektrisch betriebenes Fahrzeug insoweit angedeutet, als es für das Verständnis der Erfindung erforderlich ist. Demnach weist das Hochvolt-Batteriesystem einen Batterierahmen 1 auf, in dem insgesamt acht Batteriemodule 3 angeordnet sind. Das Rahmeninnere des Batterierahmens 1 ist in der Fahrzeugquerrichtung y unterteilt in zwei Teilräume, die von einem mittleren Längsträger 5 voneinander getrennt sind. In jedem der beiden Teilräume sind jeweils vier Batteriemodule 3 in Fahrzeuglängsrichtung x hintereinander gestapelt. In jedem der Batteriemodule 3 sind eine Anzahl von hintereinander gestapelten Batteriezellen 7 angeordnet. Diese sind miteinander elektrisch verschaltet und mit dem jeweiligen positiven und negativen Modulterminal 9, 11 (Figuren 1 oder 2) in elektrischer Verbindung. Dem Batterierahmen 1 ist ferner ein Batteriemanagementsystem BMS zugeordnet.

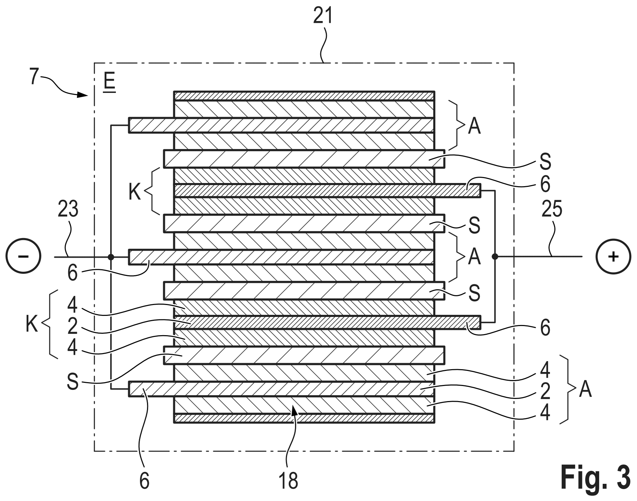

In der Figur 2 ist eines der Batteriemodule 3 in Alleinstellung gezeigt. Demnach weist das Batteriemodul 3 ein quaderförmiges Modulgehäuse 13 auf, auf dessen Oberseite eine Reihe von, mit Berstscheiben 15 verschlossene Gasaustritte 17 ausgebildet sind. Der Aufbau des Batteriemoduls 3 ist in der Figur 3 grob schematisch dargestellt. Demzufolge besteht jede der Batteriezellen 7 aus einer Elektroden-/Separatoranordnung 18 aus Anoden A, Kathoden K sowie zwischengeordneten Separatoren S. Die Elektroden-/Separatoranordnung 18 ist mit einem Flüssig-, oder Teilflüssig-Elektrolyt E benetzt und in einer in den Figuren 3 bis 4 strichpunktiert angedeuteten Schutzhülle 21 eingehaust. Zudem sind Ableiterfahnen 6 der Anoden A und der Kathoden K in elektrischem Kontakt mit dem negativen Zellableiter 23 und dem positiven Zellableiter 25, die elektrolytdicht aus der Schutzhülle 21 heraus nach außen geführt sind. Jede der kathodenseitigen und anodenseitigen Ableiterfahnen 6 ist gemäß der Figur 3 Bestandteil einer Ableiterfolie 2, die beidseitig mit Elektrodenmaterial 4 beschichtet ist.

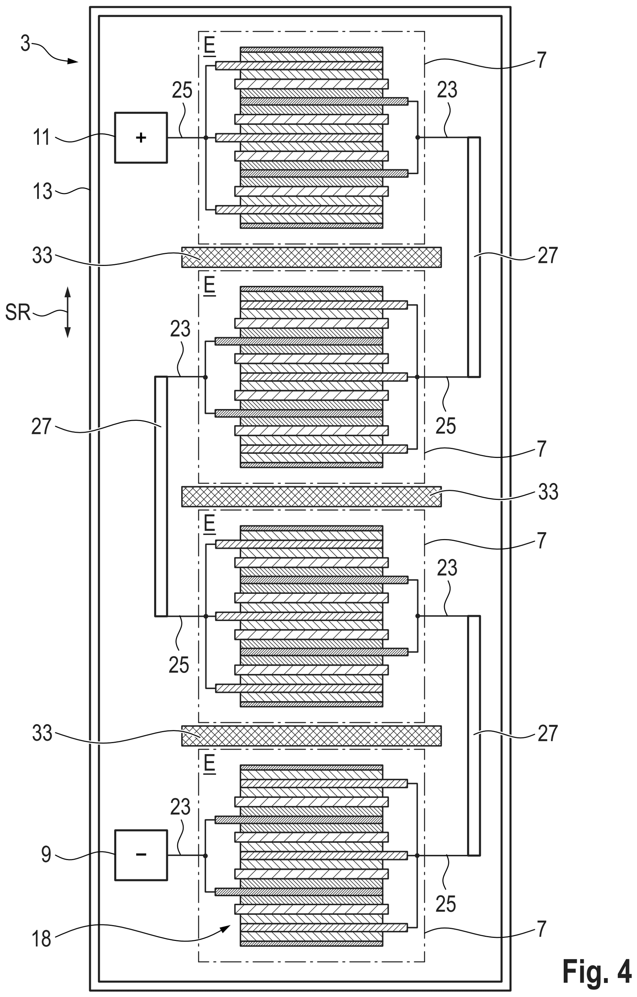

Die Zellableiter 23, 25 der in einer Stapelrichtung SR (Figur 4) hintereinander gestapelten Batteriezellen 7 sind über Stromschienen 27 miteinander in Reihenschaltung verschaltet. Zudem ist die Reihenschaltung der Batteriezellen 7 in elektrischer Verbindung mit den beiden Modulterminals 9, 11.

Ein Kern der Erfindung besteht darin, dass die Schutzhülle 21 der jeweiligen Batteriezelle 7 - im Gegensatz zu einer klassischen Pouchzellen-Schutzhülle - weder eine Gasdichtheit (um eine Gasdiffusion nach außen zu verhindern) noch eine mechanische Stabilität gewährleistet, um einem Zellinnendruck standzuhalten, der sich im Batteriebetrieb infolge einer in der jeweiligen Batteriezelle 7 stattfindenden Gasbildung aufbaut. Die erfindungsgemäße Schutzhülle 21 ist daher nicht als ein herkömmliches Zellgehäuse zu betrachten, bei dem hohe Anforderungen bezüglich Elektrolytdichtheit, Gasdichtheit und mechanischer Stabilität erfüllt sein müssen. Vielmehr bildet die Schutzhülle 21 lediglich eine modulinnere Barriere, die ausschließlich eine Elektrolyt-Abdichtung bereitstellt. Auf diese Weise gewährleistet die Schutzhülle 21, dass auf den Flüssig-, oder Teilflüssig-Elektrolyt E keine hohe elektrische Spannung einwirken kann, welche den Elektrolyt E zersetzen würde.

Im Gegensatz zur biegeschlaffen Schutzhülle 21 ist das Modulgehäuse 13 fest und formstabil zum Beispiel aus Metall- und/oder Kunststoffplatten ausgebildet, die zusammengeschweißt sein können. Der Gehäuseinnenraum des Modulgehäuses 13 ist sauerstofffrei ausgeführt. Das Modulgehäuse 13 bildet eine äußere Barriere, die sowohl eine Gasdichtheit als auch eine mechanische Stabilität gewährleistet, um einen Zellinnendruck standzuhalten, der sich im Batteriebetrieb aufgrund von Gasbildung in den Zellen 7 aufbaut. Eine solche zweistufige Barrieren-Struktur, bestehend aus der inneren Barriere (das heißt Schutzhülle 21) und der äußeren Barriere (das heißt Modulgehäuse 13), erlaubt einen reduzierten Materialeinsatz und eine effizientere Integration der Batteriezellen 7 in das Batteriemodul 3.

Im Batteriebetrieb findet innerhalb der jeweiligen Batteriezelle 7 eine Gasbildung statt, bei der zum Beispiel O₂-, H₂-, CO-, HF- und/oder CO₂-haltiges Gas gebildet wird. Dieses Gas wird zumindest teilweise durch die Schutzhülle 21 der jeweiligen Batteriezelle 7 nach außen diffundiert und sammelt sich im Gehäuseinneren des Modulgehäuses 13, und zwar unter Aufbau eines Zellinnendruckes, der von dem bauteilsteifen Modulgehäuse 13 aufgenommen wird.

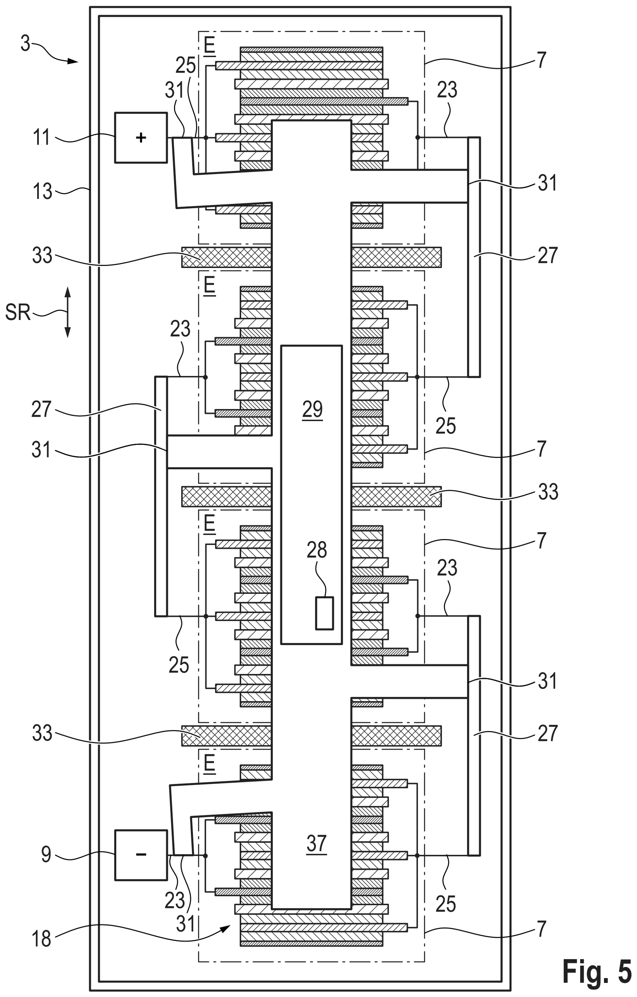

Dem jeweiligen Batteriemodul 3 ist eine Zellbalancing- und/oder Überwachungselektronik 29 zugeordnet. Die Zellbalancing- und/oder Überwachungselektronik 29 ist in der Figur 4 aus Gründen der Übersichtlichkeit weggelassen, jedoch in der Ansicht der Figur 4 dargestellt. Ein weiterer Kern der Erfindung besteht darin, dass die Zellbalancing-/Überwachungselektronik 29 nicht außerhalb des Modulgehäuses 13 angeordnet ist, sondern vielmehr zusammen mit der elektrischen Verschaltung (das heißt den Stromschienen 27) der Batteriezelle 7 im Innenraum des Modulgehäuses 13 angeordnet ist. Auf diese Weise können die Messabgriffe 31 (Figur 5) der Zellbalancing-/Überwachungselektronik 29 fertigungstechnisch einfach innerhalb des Modulgehäuses 13 positioniert sein. Die Zellbalancing-/Überwachungselektronik 29 weist eine drahtlose Kommunikationsschnittstelle 28 (Figur 5) auf, so dass die Datenverbindung zwischen der Zellbalancing-/Überwachungselektronik 29 und dem Batteriemanagementsystem BMS als eine drahtlose Datenverbindung ausgeführt ist. In der Figur 4 ist die Zellbalancing-/Überwachungselektronik 29 zudem auf einer flexiblen Leiterplatte 37 positioniert.

Wie aus den Figuren 4 oder 5 weiter hervorgeht, ist zwischen benachbarten Batteriezellen 7 jeweils ein Zellzwischenmaterial 33 angeordnet. Das Zellzwischenmaterial 33 bildet eine thermische Isolierung zwischen benachbarten Batteriezellen 7, um in einem Havariefall eine thermische Propagation (TP) innerhalb des Batteriemoduls 3 zu verhindern. Außerdem kann das Zellzwischenmaterial 33 gleichzeitig auch Swellingkräfte aufnehmen, die sich bei der Alterung sowie Lade-/Entladevorgängen während des Batteriebetriebes bilden können.

Im Falle eines thermischen Durchgehens (TR) einer der Batteriezellen 7 können die entstehenden Abgase die jeweiligen Berstscheiben 15 der im Modulgehäuse 13 ausgebildeten Gasaustritte zerstören und dadurch kontrolliert nach außen abgeleitet werden. Bevorzugt ist es, wenn ist jeder der Batteriezellen 7 genau ein im Modulgehäuse 13 ausgebildeter Gasaustritt 17 zugeordnet.

Der in der Figur 1 gezeigte Batterierahmen 1 ist aus Hohlträgern aufgebaut, deren Hohlräume im Havariefall als Gasführungskanäle wirken. Diese sind in Strömungsverbindung mit den Gasauslässen 17 des Modulgehäuses 13 des jeweiligen Batteriemoduls 3. Im Havariefall kann daher das bei dem thermischen Durchgehen (TR) entstehende Gas kontrolliert aus dem zugeordneten Gasaustritt 15 austreten und über die Hohlträger des Batterierahmens 1 nach fahrzeugaußen geführt werden.

Im Gegensatz zur Erfindung ist im Stand der Technik das Zellgehäuse (das heißt zum Beispiel eine Pouchzellen-Schutzhülle) einer herkömmlichen Batteriepouchzelle fertigungstechnisch aufwändig aus einem mehrlagigen Folienmaterial aufgebaut, das heißt zum Beispiel aus einem Laminat aus Aluminiumfolie, Polypropylenfolie, Nylonfolie und PET-Folie. Das Laminat-Folienmaterial kann insgesamt eine Materialstärke von ca. 80 µm aufweisen, wobei der größte Anteil der Materialstärke durch die Aluminiumfolie bereitgestellt ist, die eine Materialstärke von etwa 40 µm einnehmen kann. Mittels der Aluminiumfolie ist eine Gasdichtheit während des Batteriebetriebs gewährleistet, bei der es in jeder der Batteriezellen zu einer Gasbildung kommen kann, etwa O₂-, H₂-, HF-, CO- und/oder CO₂-haltiges Gas.

In der Figur 5 ist in einem Blockschaltdiagramm eine Prozessabfolge zur Herstellung einer in der Figur 3 gezeigten Batteriezelle 7 angedeutet: Demnach wird zunächst die Elektroden-/Separatoranordnung 18 in die beutelförmige, noch offene Schutzhülle 21 eingebracht. Anschließend erfolgt eine Elektrolyt-Befüllung der Schutzhülle 21, bei der die Elektroden-/Separatoranordnung 17 mit dem Elektrolyt E benetzt wird. Nach der Elektrolyt-Befüllung wird die Schutzhülle 21 elektrolytdicht versiegelt. Danach kann ein Formierungsprozess erfolgen. Hierbei kann die Schutzhülle 21 mit einer Gastasche ausgebildet sein, um die während der Formierung entstehenden Gase aufzufangen. Nach Abschluss des Formierungsprozesses wird die Gastasche von Schutzhülle 21 abgetrennt. Die so hergestellten Batteriezellen 7 werden in einem folgenden Prozess mittels der Stromschienen 27 elektrisch miteinander verschaltet sowie außerdem an die Zellbalancing-/Überwachungselektronik 29 angebunden. Anschließend werden die elektrisch miteinander verschalteten Zellen in einer inerten Atmosphäre in das Modulgehäuse 13 eingesetzt. Im weiteren Verlauf wird das Modulgehäuse 13 gasdicht nach außen verschlossen.

### Bezugszeichenliste

- 1: Batterierahmen
- 2: Stromableiterfolie
- 3: Batteriemodul
- 4: Elektrodenmaterial
- 5: Längsträger
- 6: Ableiterfahne
- 7: Batteriezelle
- 9, 11: Modulterminals
- 13: Modulgehäuse
- 15: Berstscheibe
- 17: Gasaustritt
- 18: Elektroden-/Separatoranordnung
- 21: Schutzhülle
- 23, 25: Zellableiter
- 27: Stromschiene
- 28: drahtlose Kommunikationsschnittstelle
- 29: Zellbalancing-/Überwachungselektronik
- 31: Messabgriffe
- 33: Zellzwischenmaterial
- 37: flexible Leiterplatte
- A: Anode
- K: Kathode
- E: Flüssig-, oder Teilflüssig-Elektrolyt
- BMS: Batteriemanagementsystem
- SR: Stapelrichtung

## Patentansprüche

1. Batteriemodul (3) mit einem Modulgehäuse (13), in dem ein Zellverband aus Batteriezellen (7) angeordnet ist, wobei jede der Batteriezellen (7) aus einer mit Flüssig-, oder Teilflüssig-Elektrolyt (E) benetzten Elektroden-/Separatoranordnung (18) aufgebaut ist, **dadurch gekennzeichnet, dass** jede der Batteriezellen (7) eine elektrolytbeständige Schutzhülle (21) aufweist, in der die mit Flüssig-, oder Teilflüssig-Elektrolyt (E) benetzten Elektroden-/Separatoranordnung (18) angeordnet ist, und dass die Schutzhülle (21) als eine modulinnere Barriere eine elektrolytabdichtende Funktion übernimmt, während das Modulgehäuse (13) als moduläußere Barriere eine Gasdichtheit sowie eine mechanische Stabilität der jeweiligen Batteriezelle (7) im Zellverband gewährleistet.

2. Batteriemodul (3) nach Anspruch 1, **dadurch gekennzeichnet, dass** während eines Batteriebetriebs in der jeweiligen Batteriezelle (7) eine Gasbildung erfolgt, etwa die Bildung von O₂-, H₂-, CO-, CO₂-haltiges Gas, und dass insbesondere dieses Gas zumindest teilweise durch die Schutzhülle (21) der jeweiligen Batteriezelle (7) nach außen diffundiert und sich im Modulgehäuseinneren sammelt.

3. Batteriemodul (3) nach Anspruch 1 oder 2, **dadurch gekennzeichnet, dass** die Batteriezelle (7) jeweils einen positiven und einen negativen Zellableiter (23, 25) aufweist, die elektrolytdicht aus der Schutzhülle (21) herausgeführt sind, und dass zur elektrischen Verschaltung der Batteriezellen (7) deren Zellableiter (23, 25) direkt oder über Stromschienen (27) miteinander in elektrischem Kontakt sind.

4. Batteriemodul (3) nach einem der vorhergehenden Ansprüche, **dadurch gekennzeichnet, dass** dem Batteriemodul (3) eine Zellbalancing- und/oder Überwachungselektronik (29) zugeordnet ist, die über Messabgriffe (31) die Zellspannung jeder der Batteriezellen (7) erfasst, und dass insbesondere die Zellbalancing- und/oder Überwachungselektronik (29) innerhalb des Modulgehäuses (13) angeordnet ist.

5. Batteriemodul (3) nach Anspruch 4, **dadurch gekennzeichnet, dass** die Zellbalancing- und/oder Überwachungselektronik (29) mit einem Batteriemanagementsystem (BMS) in Datenverbindung ist, mittels dem die Zellbalancing- und/oder Überwachungselektronik (29) ansteuerbar ist, und dass insbesondere die Zellbalancing- und/oder Überwachungselektronik (29) eine drahtloses Kommunikationsschnittstelle (28) aufweist, so dass die Datenverbindung zwischen der Zellbalancing- und/oder Überwachungselektronik (29) und dem Batteriemanagementsystem (BMS) als eine drahtlose Datenverbindung ausgeführt ist.

6. Batteriemodul (3) nach einem der vorhergehenden Ansprüche, **dadurch gekennzeichnet, dass** die Batteriezellen (7) in einer Stapelrichtung hintereinander im Modulgehäuse (13) gestapelt sind, und dass zur Vermeidung einer thermischen Propagation zwischen benachbarten Batteriezellen (7) ein Zellzwischenmaterial (33) als thermische Isolierung angeordnet ist, und oder dass insbesondere das Zellzwischenmaterial (33) als ein Kompensationspad wirkt, das Swellingkräfte aufnimmt, die sich bei der Alterung sowie Lade-/Entladevorgängen während des Batteriebetriebs bilden.

7. Batteriemodul (3) nach einem der vorhergehenden Ansprüche, **dadurch gekennzeichnet, dass** das Modulgehäuseinnere sauerstofffrei ist, und/oder dass der Zusammenbau des Modulgehäuses (13) in einer inerten Atmosphäre erfolgt.

8. Batteriemodul (3) nach einem der vorhergehenden Ansprüche, **dadurch gekennzeichnet, dass** das Modulgehäuse (13) zumindest einen, mittels einer Berstscheibe (15) geschlossenen Gasaustritt (17) aufweist, über den im Falle eines thermischen Durchgehens einer der Batteriezellen (7) das entstehende Gas kontrolliert nach außen ableitbar ist, und dass insbesondere jeder der Batteriezellen (7) ein im Modulgehäuse (13) ausgebildeter Gasaustritt (17) zugeordnet ist.

9. Hochvolt-Batteriesystem für ein elektrisch betriebenes Fahrzeug mit einem Batterierahmen (1), in dem zumindest ein Batteriemodul (3) nach einem der vorhergehenden Ansprüche angeordnet ist.

10. Hochvolt-Batteriesystem nach Anspruch 9, **dadurch gekennzeichnet, dass** der Batterierahmen (1) aus Hohlträgern aufgebaut ist, deren Hohlräume einen Gasführungskanal bilden, der in Strömungsverbindung mit dem Gasaustritt (17) des Modulgehäuses (13) des Batteriemoduls (3) bringbar ist, so dass insbesondere im Havariefall die bei einem thermischen Durchgehen entstehenden Gase kontrolliert über die Hohlträger des Batterierahmens (1) nach fahrzeugaußen führbar sind.
